# FASCICULE DE BREVET EUROPEEN

(11) **EP 0 976 946 B1**
(45) Date de publication et mention de la délivrance du brevet: **15.09.2004**
(21) Numéro de dépôt: 99401851.3
(22) Date de dépôt: 22.07.1999
(51) Int. Cl.: F16F 7/10, F16F 15/03, H02K 33/12, B60K 5/12

(54) **Moteur électromagnétique et dispositif de controle actif des vibrations comportant au moins un tel moteur.**
Elektromagnet-Motor und aktive Schwingungsvorrichtung unter Verwendung eines solchen Motors
Electromagnetic motor and active vibration control device incorporating such a motor

(30) Priorité: 30.07.1998 FR 9809760
(43) Date de publication de la demande: 02.02.2000
(73) Titulaire: HUTCHINSON, 75008 Paris (FR)
(72) Inventeur: Pompei, Michel, 91700 Villiers-sur-Orge (FR)
(74) Mandataire: Doireau, Marc

(56) Documents cités:
- EP-A- 0 509 911
- WO-A-92/01876
- US-A- 4 793 599
- US-A- 4 874 998
- US-A- 4 947 067
- US-A- 5 091 710
- PATENT ABSTRACTS OF JAPAN vol. 97, no. 7, 31 juillet 1997 (1997-07-31) & JP 09 085168 A (MITSUBISHI HEAVY IND LTD), 31 mars 1997 (1997-03-31)

## Description

La présente invention se rapporte principalement à un moteur électromagnétique, notamment à un moteur linéaire et à un dispositif de contrôle actif de vibrations comportant au moins un tel moteur.

Un moteur linéaire peut être réalisé avec au moins un électroaimant attirant une plaque polaire. Deux forces de sens opposés sont obtenues dans un tel moteur, soit par la mise en oeuvre d'un électroaimant assurant, par attraction d'une plaque polaire, le déplacement de la plaque polaire ou de l'électro-aimant selon que l'un ou l'autre est rendu mobile dans un premier sens et des moyens élastiques de rappel agissant en sens inverse, solution inadaptée si l'on veut pouvoir contrôler les déplacements dans les deux sens, soit par la mise en oeuvre de deux électroaimants alignés, chacun attirant une plaque polaire disposée en vis-à-vis. Cette dernière solution conduit à des moteurs linéaires d'une longueur importante. De plus, de tels moteurs ne permettent pas d'assurer les déplacements selon plusieurs axes et l'assemblage de tels moteurs orientés selon des axes différents conduit à un assemblage particulièrement complexe et volumineux.

Le déplacement de la plaque polaire ou de l'électro-aimant selon que l'on a rendu l'un ou l'autre mobile peut être utilisé pour être transmis à un autre organe mécanique. Il va de soi que la partie mobile est maintenue statiquement soit par un guidage mécanique soit par une suspension élastique. Dans ce dernier cas, au delà de la fréquence propre de cette suspension, la masse de la partie mobile sert d'appui pour introduire l'effort.

C'est par conséquent un but de la présente invention d'offrir un moteur électromagnétique court.

C'est également un but de la présente invention d'offrir un tel moteur ayant une géométrie permettant de s'adapter à des équipements existants et pouvant servir également de vibreur pour des machines à vibrer.

C'est aussi un but de la présente invention d'offrir un tel moteur linéaire.

C'est aussi un but de la présente invention d'offrir un dispositif de contrôle actif des vibrations compact et efficace.

C'est également un but de la présente invention d'offrir un tel moteur susceptible, sur commande, de réaliser des déplacements selon deux ou trois axes orthogonaux.

Ces buts sont atteints par un moteur selon la revendication 1 dont la structure permet d'éviter d'aligner une pluralité d'actionneurs électromagnétiques, typiquement des bobines ou des électroaimants, comme c'est le cas dans le Brevet US 5 091 710 qui concerne un moteur électromagnétique comportant quatre actionneurs alignés deux à deux et organisés selon deux axes parallèles.

Les actionneurs électromagnétiques du moteur selon la présente invention ont des axes parallèles deux à deux.

L'invention sera mieux comprise au moyen de la description ci-après et des figures annexées données comme des exemples non limitatifs et sur lesquelles :
- la figure 1 est une vue en coupe schématique d'un moteur de type connu ;
- la figure 2 est une vue en coupe schématique d'un mode de réalisation d'un moteur qui n'est pas couvert par les revendications, mais qui est utile à la compréhension de l'invention ;
- la figure 3 est une vue en perspective schématique illustrant le principe de fonctionnement de l'exemple préféré de réalisation d'un moteur selon l'invention assurant le déplacement selon un axe unique ;
- la figure 4 est une vue analogue d'un exemple de réalisation d'un moteur susceptible de se déplacer, sur commande, selon trois axes orthogonaux ;
- la figure 5 est une vue schématique en coupe d'une variante de réalisation d'un moteur selon la présente invention ;
- la figure 6 est une vue en perspective d'un exemple de réalisation d'une platine porte-actionneurs et de plaques polaires associées du moteur selon la présente invention de la figure 3 ;
- la figure 7 est une vue en perspective de la platine de la figure 6 montée dans une carcasse cylindrique ;
- la figure 8 est une vue en perspective éclatée d'une première variante de réalisation de l'exemple préféré de moteur selon la présente invention de la figure 4 destinée à être superposée avec un plot support ;
- la figure 9 est une vue analogue du moteur de la figure 8 dans laquelle une platine porte-actionneurs a été assemblée ;
- la figure 10 est une vue analogue du moteur de la figure 8 dans lequel la platine est disposée dans un boîtier ;
- la figure 11 est une vue en perspective éclatée d'une deuxième variante de réalisation de l'ensemble préféré du moteur selon la présente invention de la figure 4 destinée à être montée de manière externe autour d'un plot support ;
- la figure 12 est une vue analogue du moteur de la figure 11 sur laquelle la platine porte-actionneurs a été assemblée ;
- la figure 13 est une vue analogue du moteur de la figure 10 dans lequel la platine porte-actionneurs est disposée dans son boîtier ;
- la figure 14 est une vue analogue du moteur de la figure 11 disposé autour d'un plot support ;
- la figure 15 est une vue analogue du moteur de la figure 11 sur laquelle le couvercle a été mis en place sur le boîtier ;
- la figure 16 est un schéma de principe d'un dispositif de contrôle actif de vibrations utilisant quatre moteurs linéaires selon la présente invention.

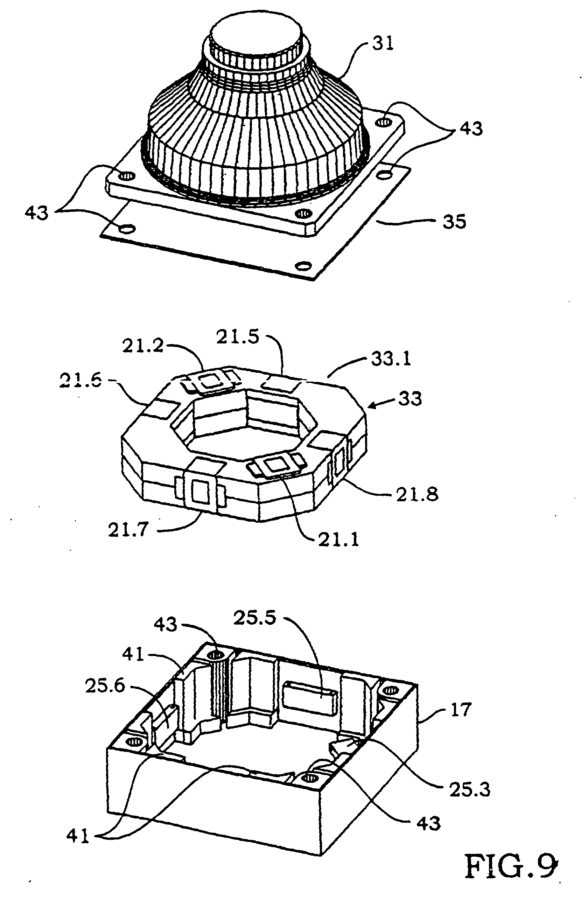

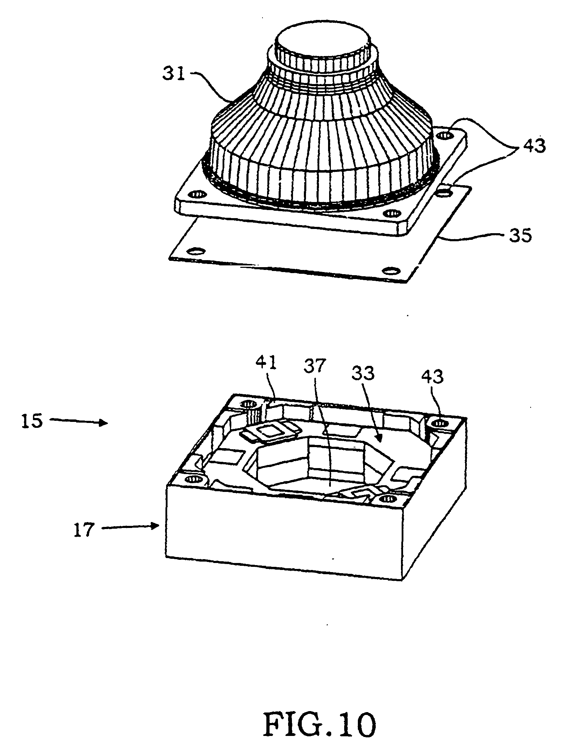

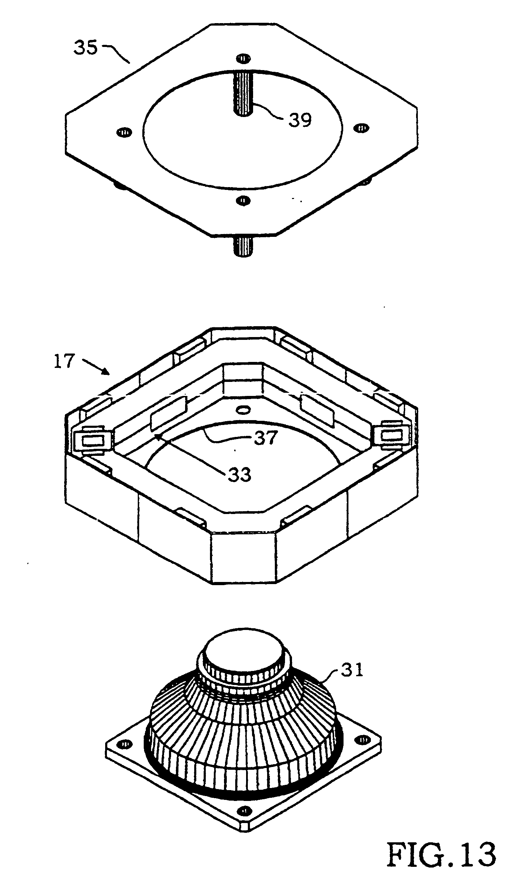

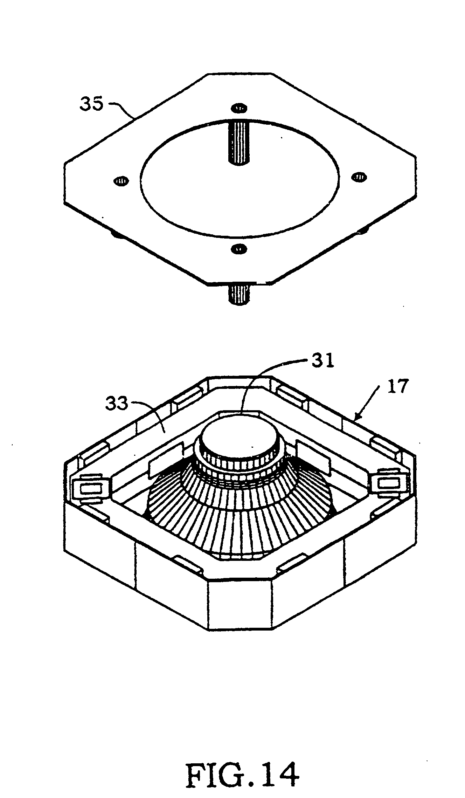

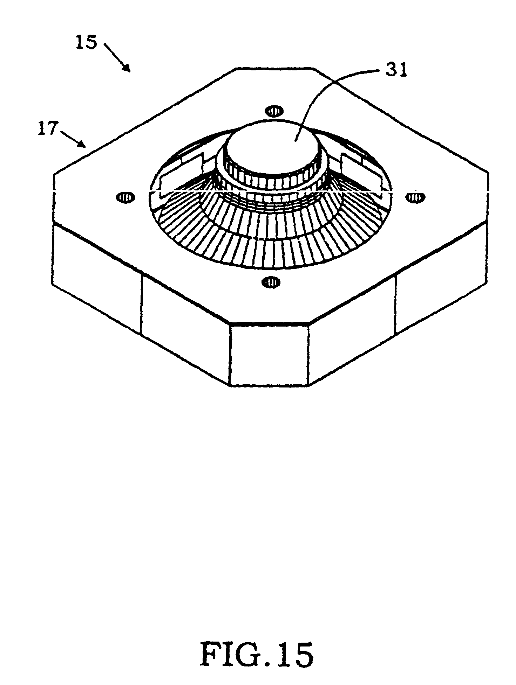

Sur les figures 2 à 16, on a utilisé les mêmes références pour désigner les mêmes éléments.

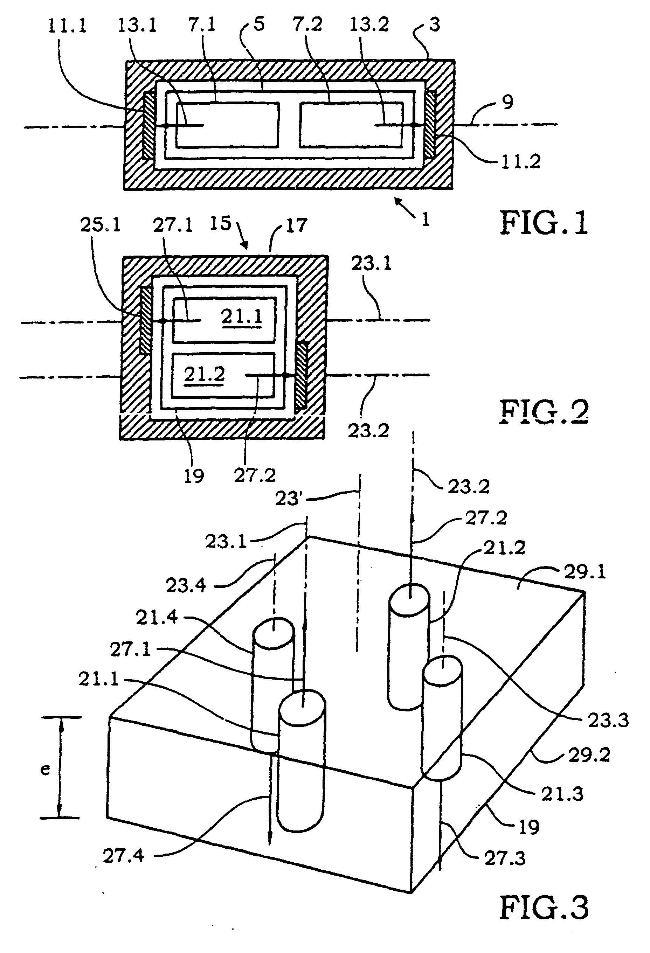

Sur la figure 1, on peut voir un moteur linéaire 1 de type connu comprenaht, monté dans une carcasse ou un boîtier 3, un équipage mobile 5 formant masse inertielle comprenant deux éléctroaimants 7.1 et 7.2 montés tête-bêche dans le prolongement l'un de l'autre et alignés selon un axe commun 9. L'électroaimant 7.1 attire, sur commande, c'est-à-dire lorsqu'il est alimenté par un courant électrique, une plaque polaire 11.1 solidarisée avec le boitier 3 en vis-à-vis de cet électroaimant 7.1. La force d'attraction assure un déplacement de la masse inertielle 5 selon la flèche 13.1.

L'électroaimant 7.2 attire, sur commande, c'est-à-dire lorsqu'il est alimenté par un courant électrique, une plaque polaire 11.2 solidarisée avec le boîtier 3 en vis-à-vis de cet électroaimant 7.2. La force d'attraction assure un déplacement de la masse inertielle 5 selon la flèche 13.2.

Sur la figure 2, on peut voir un moteur électromagnétique 15 comportant, monté dans une carcasse ou un boîtier 17, un équipage mobile formant masse inertielle 19 comprenant deux actionneurs 21.1 et 21.2 placés côte à côte. Les actionneurs 21.1 et 21.2 sont par exemple du type électroaimants ou bobines électromagnétiques. Avantageusement, les deux actionneurs 21.1 et 21.2 sont disposés selon deux axes parallèles 23.1 et 23.2. La disposition côte à côte, avec les axes parallèles, permet de réduire la longueur de la masse inertielle 19, et par suite, l'encombrement du moteur Les deux actionneurs 21.1 et 21.2 sont disposés tête bêche, chacun étant susceptible d'exercer une action en sens opposé. Une plaque polaire 25.1, typiquement en tôle magnétique en acier au silicium est solidarisée avec le boîtier 17 en vis-à-vis de l'actionneur 21.1. Une alimentation en courant électrique de l'actionneur 21.1 provoque l'attraction de la plaque polaire 25.1 par cet actionneur, et par suite un déplacement de la masse inertielle 19 selon la flèche 27.1, et une force.

Une plaque polaire 25.2, typiquement en tôle magnétique en acier au silicium est solidarisée avec le boîtier 17 en vis-à-vis de l'actionneur 21.2 Une alimentation en courant électrique de l'actionneur 21.2 provoque l'attraction de la plaque polaire 25.2 par cet actionneur, et par suite un déplacement de la masse inertielle 19 selon la flèche 27.2, et une force.

En l'absence d'alimentation électrique des actionneurs 21.1 et 21.2, la masse inertielle 19 ne subit pas de force électromagnétique et est maintenue par des moyens de suspension (non représentés).

Les forces engendrées par les actionneurs 21.1 et 21.2 engendrent également un couple de rotation de la masse inertielle 19.

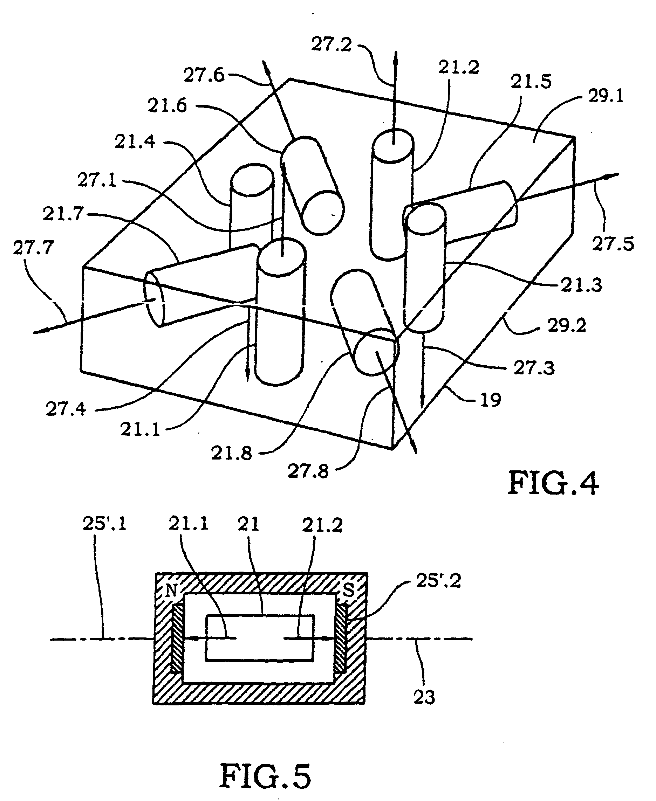

Au contraire, les exemples de réalisation illustrés sur les figures 3 et 4 entraînent des déplacements linéaires sans couple de rotation. Sur ces figures, on a représenté uniquement la masse inertielle 19, étant bien entendu que des plaques polaires correspondantes sont solidarisées avec un boîtier non représenté vis-à-vis des actionneurs.

L'exemple de réalisation de la figure 3 comporte quatre actionneurs 21.1 d'axe 23.1, 21.2 d'axe 23.2, 21.3 d'axe 23.3 et 21.4 d'axe 23.4, régulièrement répartis sur la masse inertielle 19 par exemple en forme d'un parallélépipède rectangle. Soit 23' un axe passant par le centre de gravité de la masse inertielle 19 et normal à ses faces principales 29.1 et 29.2. Les axes 23.1, 23.2, 23.3, 23.4 et 23' sont avantageusement parallèles. Les actionneurs disposés symétriquement par rapport à l'axe 23' sont avantageusement orientés vers une même face principale de la masse inertielle 19 comme illustré par les flèches 27.1 à 27.4 symbolisant les forces d'attraction exercées par les actionneurs 21.1 à 21.4. Dans l'exemple illustré, les actionneurs 21.1 et 21.2 sont orientés vers la face supérieure 29.1 alors que les actionneurs 21.3 et 21.4 sont orientés vers la face inférieure 29.2.

Pour une même direction, les actionneurs travaillant dans cette direction et dans le même sens sont disposés symétriquement par rapport à l'axe de travail de l'actionneur, ceci pour éviter de générer un couple. Le nombre N d'actionneurs, travaillant dans une direction et dans un même sens est pair N=2m m=1,2... et ces actionneurs sont disposés symétriquement par rapport à l'axe de travail.

Dans un premier exemple de réalisation, l'épaisseur e de la masse inertielle 19 est sensiblement égale à la hauteur des actionneurs 21.1 à 21.4. Dans un tel cas, ces actionneurs s'étendent sensiblement sur toute l'épaisseur de la masse inertielle 19. En variante, l'épaisseur e est supérieure à la longueur des actionneurs 21.1 à 21.4. Dans un tel cas, il est avantageux de rapprocher les actionneurs de la face principale de la masse inertielle 19 vers laquelle ils sont orientés.

Sur la figure 4, on peut voir un exemple de réalisation d'une masse inertielle 19 selon la présente invention comportant des actionneurs permettant le déplacement de cette masse inertielle selon trois axes perpendiculaires. Outre les actionneurs 21.1 à 21.4, la masse inertielle 19 comporte quatre actionneurs 21.5 à 21.8 alignés et opposés deux à deux et disposés à mi-épaisseur de la masse inertielle 19 parallèlement aux diagonales des faces principales 29.1 et 29.2.

Il est à noter que les actionneurs 21.6 et 21.8 d'une part et 21.5 et 21.7 d'autre part sont alignés ce qui peut conduire à une augmentation de la taille de la masse inertielle. Toutefois, cela est plus admissible dans un moteur susceptible de fonctionner selon deux ou trois axes orthogonaux dans la mesure où on récupère pour loger les actionneurs supplémentaires l'espace disponible entre les actionneurs correspondant aux autres axes.

Toutefois, il est bien entendu que la mise en oeuvre de quatre actionneurs d'axes parallèles (analogues aux actionneurs 21.1 à 21.4 de la masse inertielle de la figure 3) par axe de déplacement ne sort pas du cadre de la présente invention. Dans un tel cas, la masse inertielle 19 pourrait être par exemple de forme cubique, et comporterait douze actionneurs régulièrement répartis par rapport aux axes passant par le centre de gravité de la masse inertielle mais, de préférence décalés de manière à utiliser au mieux le volume disponible dans la masse inertielle.

Il est bien entendu que le moteur selon la présente invention comporte en outre des moyens d'amenée de courant aux actionneurs à activer, des moyens de suspension élastique correspondant au nombre d'axes actifs, notamment des moyens de suspension à lame ou, avantageusement des moyens de suspension omnidirectionnelle en élastomère ainsi que d'éventuels capteurs de position de la masse inertielle 19 dans le boîtier 17, de manière à permettre un asservissement si cela est désiré.

Il est bien entendu que la présente invention n'est pas limitée à la disposition des actionneurs sur la masse inertielle mais englobe également les variantes de réalisation dans lesquelles les actionneurs sont solidarisés avec le boîtier 17 en lieu et place des plaques polaires, l'équipage mobile formé par la masse inertielle 19 portant une ou plusieurs plaques polaires attirées par les divers aimants.

Sur la figure 5, on peut voir une variante de réalisation du moteur selon la présente invention dans laquelle les masses polaires sont remplacées par des aimants permanents 25'.1 et 25'.2, diamétralement opposés selon un axe 23 et de polarisations opposées. Un actionneur unique 21, par exemple un bobinage est, selon le sens de circulation du courant, attiré par l'élément permanent 25'.1 et repoussé par l'aimant permanent 25'.2 symbolisé par la flèche 21.1 ou au contraire attiré par l'aimant permanent 25'.2 et repoussé par l'aimant permanent 25'.1 comme illustré par la flèche 21.2 .

De même, la mise en oeuvre d'actionneurs exerçant une force de répulsion et non pas une force d'attraction ne sort pas du cadre de la présente invention.

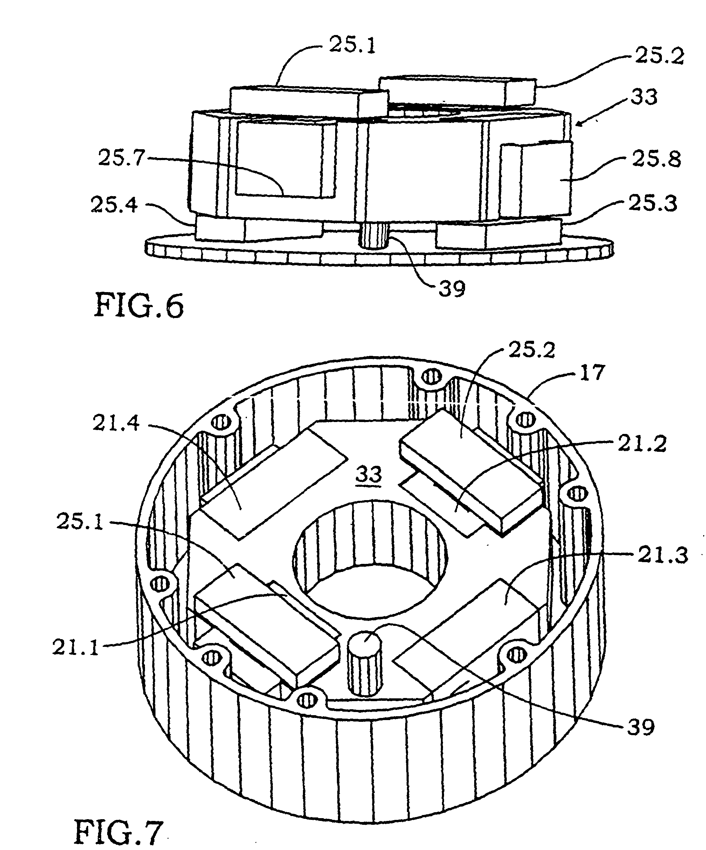

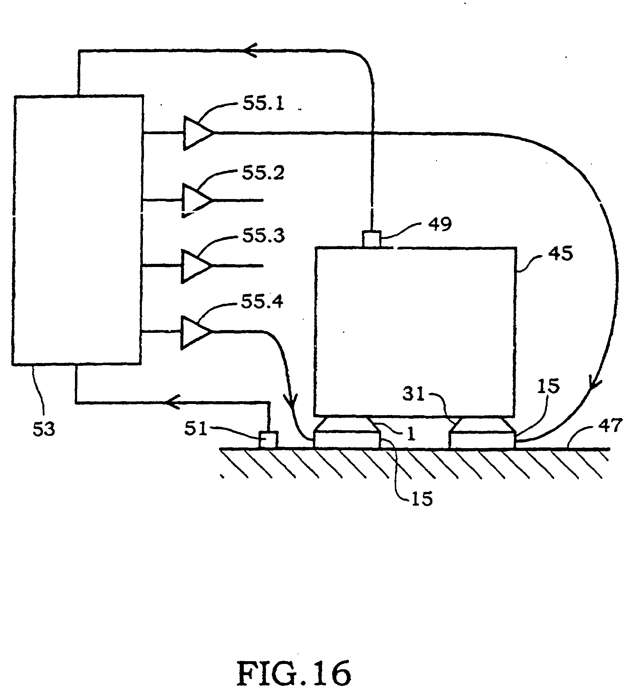

Sur les figures 6 à 10, on peut voir un premier exemple de réalisation préféré d'un moteur selon la présente invention susceptible de fonctionner selon trois axes perpendiculaires, disposé dans un boîtier compact de faible hauteur ayant la forme d'un parallélépipède rectangle de base carrée. Cette forme de boîtier permet de superposer le moteur selon la présente invention avec d'autres dispositifs, notamment avec un plot 31 réalisé en un matériau absorbant les vibrations, avantageusement en élastomère, par exemple en caoutchouc naturel. Un ensemble de tels plots peut servir de support à des machines susceptibles d'engendrer des vibrations, comme par exemple des machines tournantes. Les vibrations sont très fortement atténuées par les plots 31. Le moteur selon la présente invention peut être intégré dans un dispositif de contrôle actif des vibrations résiduelles transmises par le plot 31 dont un exemple est illustré sur la figure 16.

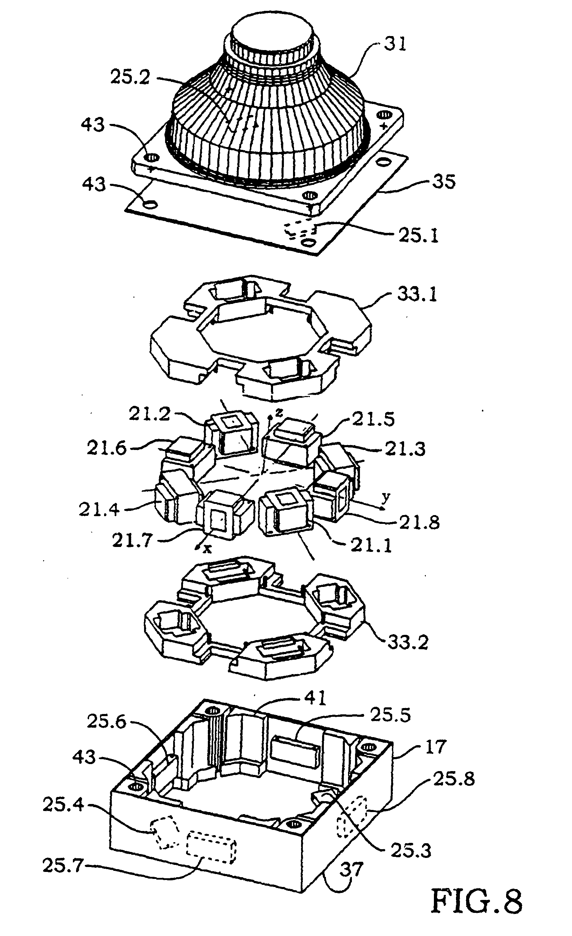

Le moteur des figures 6 à 10 comporte une platine 33 support des actionneurs électromagnétiques comprenant un élément supérieur 33.1 et un élément inférieur 33.2, avantageusement symétriques par rapport à un plan horizontal. La platine 33 reçoit les actionneurs 21.1 à 21.8 avec des axes disposés, de manière à obtenir, sur commande, les déplacements désirés. Dans l'exemple non limitatif illustré, la platine 33 est octogonale et comporte huit évidements de réception des actionneurs. On utilise par exemple les circuits magnétiques de transformateurs. La platine munie des actionneurs (figures 6, 7, 9 et 10) est disposée dans une carcasse cylindrique (figure 7) ou, avantageusement, dans un boîtier ayant la forme d'un parallélépipède rectangle de base carrée (figures 8, 9 et 10). Des plaques polaires 25.5, 25.6, 25.7 et 25.8 sont solidarisées avec les parois verticales du boîtier 17. Des plaques polaires 25.1 et 25.2 sont solidarisées avec une plaque de fermeture supérieure 35 du moteur selon la présente invention. Des plaques polaires 25.3 et 25.4 sont solidarisées avec une plaque de fermeture inférieure 37 du moteur selon la présente invention.

Le boîtier 17 reçoit d'autre part des moyens de suspension de la platine 33 par exemple quatre plots en élastomère 39 (dont le seul est illustré sur les figures 6 et 7) et/ou des butées élastiques 41 également en élastomère. En variante, la suspension peut être obtenue par des ressorts, notamment en acier. Les actionneurs 21.1 à 21.8 sont disposés entre les deux parties 33.1 et 33.2 de la platine 33 avant leur solidarisation. La platine 33 assemblée est placée dans le boîtier 17. Les plaques inférieures et supérieures ainsi que, avantageusement, une plaque support du plot 31, sont assemblées par exemple par des boulons et écrous (non représentés) passant par des ouvertures 43 disposées aux quatre coins de ces éléments. Les ensembles moteur 15 - plot de fixation 31 peuvent alors être solidarisés avec le support de la machine dont on veut contrôler les vibrations. On dispose la machine et on effectue les connections électriques désirées.

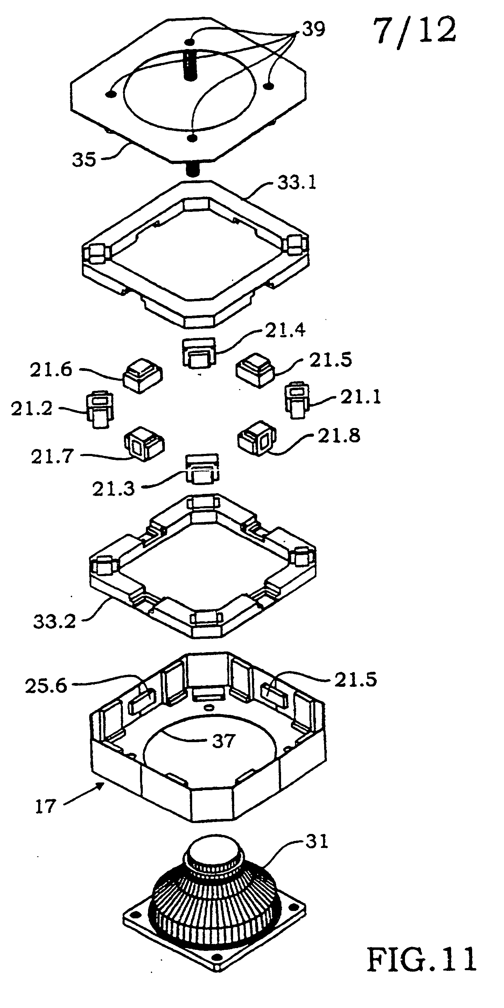

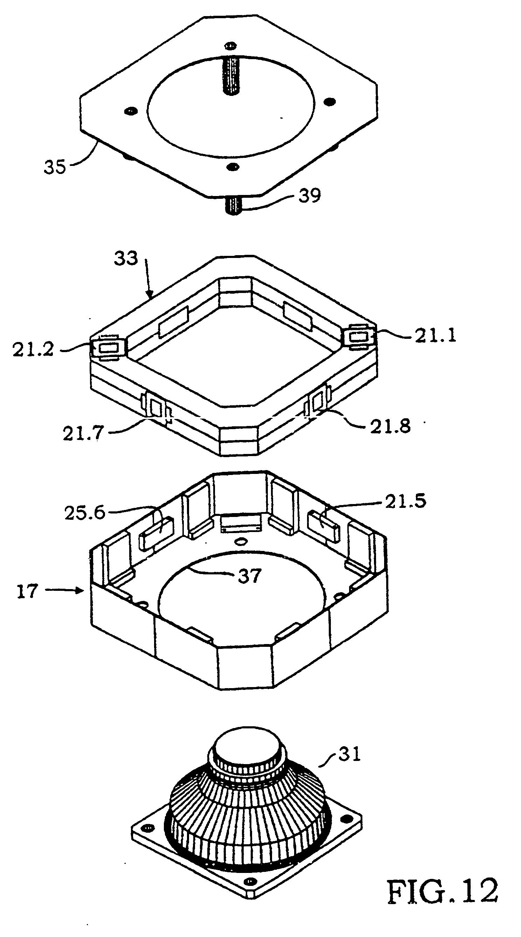

Sur les figures 11 à 15, on peut voir une variante du moteur 15 selon la présente invention comportant une ouverture centrale de réception d'un plot 31. Cette ouverture centrale est ménagée aussi bien dans la plaque de fond 37, la platine 33 que dans la plaque supérieure 35. L'extension verticale du boîtier du moteur selon la présente invention illustré sur les figures 12 à 15 est inférieure à la hauteur du plot 31 de manière à éviter tout contact direct entre la machine tournante ou autre dont on veut éliminer les vibrations et le moteur 15 selon la présente invention. Le moteur des figures 11 à 15 peut être facilement adapté aux machines existantes reposant sur des plots. Cette mise en place s'effectue de la manière suivante. On dépose ou soulève la machine dont on veut éliminer les vibrations, on entoure les plots avec les moteurs selon la présente invention, on repose la machine sur les plots entourés par les moteurs selon la présente invention et on effectue les connections électriques désirées.

Sur la figure 16, on peut voir un dispositif de contrôle actif des vibrations selon la présente invention, remarquable en ce qu'il comporte des moteurs 15 selon la présente invention, par exemple les moteurs tels qu'illustrés sur les figures 6 à 10 de la présente demande. Une machine 45, par exemple un moteur, repose sur un plancher 47 par l'intermédiaire de quatre plots 31 d'amortissement des vibrations, chacun reposant sur un moteur 15 selon la présente invention (seuls deux sont visibles sur la figure). En variante (non illustrée), les moteurs 15 des figures 11 à 15 entourent des plots 31. Un premier capteur de vibrations 49 est disposé sur la machine 45 et un deuxième capteur de vibrations 51 est disposé sur le plancher 47. Les capteurs 49 et 51 sont reliés à un calculateur 53 élaborant en temps réel des signaux de commande de divers actionneurs des moteurs 15, créant des vibrations d'amplitude égales et en opposition de phase avec celles engendrées par le fonctionnement de la machine 45. Les signaux de commande sont appliqués, avantageusement, par l'intermédiaire d'amplificateurs 55.1 à 55.4 aux moteurs 15 concernés.

La présente invention s'applique principalement au contrôle de vibrations et trouve son application dans l'industrie pour la suspension des machines tournantes, des transformateurs, des machines de mesure, etc... Elle peut être aussi utilisée en tant que générateur de vibration pour des machines utilisant des vibreurs ou pour contrôler un bruit en générant des vibrations de structure émettrices d'un bruit en opposition de phase.

## Revendications

1. Moteur électromagnétique comportant une pluralité d'actionneurs, et comportant au moins deux actionneurs (21.1, 21.2) disposés côte à côte et exerçant alternativement des forces suivant des sens opposés **caractérisé en ce qu'**il comporte au moins quatre actionneurs (21.1, 21.2, 21.3, 21.4) d'axes différents et parallèles à un premier axe formant un axe de travail du moteur, deux premiers actionneurs (21.1, 21.2) exerçant une force (27.1, 27.2) dans un premier sens, et deux deuxièmes actionneurs (21.3, 21.4) exerçant des forces (27.3, 27.4) dans un deuxième sens opposé au premier sens et **en ce que** les deux premiers actionneurs (21.1, 21.2) d'une part, et les deux deuxièmes actionneurs (21.3, 21.4) d'autre part sont disposés symétriquement par rapport au dit premier axe, de manière à générer des déplacements linéaires sans couple de rotation.

2. Moteur selon la revendication 1, **caractérisé en ce que** ledit moteur est un moteur linéaire.

3. Moteur selon l'une des revendications 1 ou 2, **caractérisé en ce que** les actionneurs (21.1, 21.2, 21.3, 21.4) sont des électroaimants.

4. Moteur selon l'une quelconque des revendications précédentes, **caractérisé en ce qu'**il comporte une platine (33) recevant les divers actionneurs et formant la masse inertielle du moteur.

5. Moteur selon l'une quelconque des revendications précédentes, **caractérisé en ce qu'**il comporte en outre des actionneurs (21.5, 21.6, 21.7, 21.8) permettant, sur commande, des déplacements d'équipage mobile (19, 33) selon trois axes orthogonaux.

6. Moteur selon la revendication 5, **caractérisé en ce qu'**il présente deux troisièmes actionneurs (21.5, 21.7) dont chacun est intercalé entre un premier et un deuxième actionneurs, et exerçant des forces de sens opposés (27.5, 27.7) selon un deuxième axe orthogonal au premier axe et deux quatrièmes actionneurs (21.6, 21.8) dont chacun est intercalé entre un premier et un deuxième actionneur et exerçant des forces de sens opposés (27.6, 27.8) selon un troisième axe orthogonal aux premier et deuxième axes.

7. Moteur selon l'une quelconque des revendications précédentes, **caractérisé en ce qu'**il comporte un boîtier ou une carcasse (17) susceptible de recevoir un plot (31) d'absorption des vibrations, et **en ce qu'**il comporte des moyens (43) de fixation dudit plot (31) sur le boîtier ou sur la carcasse.

8. Moteur selon l'une quelconque des revendications précédentes, **caractérisé en ce qu'**il présente un boîtier (17) qui comporte un évidement central recevant un plot (31) d'absorption de vibrations, dont la hauteur est supérieure à l'extension verticale du boîtier (17').

9. Dispositif de contrôle actif des vibrations comportant un capteur de vibrations (49, 51) assurant l'acquisition des vibrations à éliminer, des moyens de calcul (53) d'élaboration en temps réel des signaux de commande d'actionneurs, **caractérisé en ce qu'**il comporte au moins un moteur (15) selon l'une quelconque des revendications précédentes générant sous contrôle des moyens de calcul (53), des vibrations d'amplitude égale et en opposition de phase avec les vibrations à contrôler.

## Patentansprüche

1. Elektromagnetischer Motor, der eine Vielzahl von Betätigungselementen umfaßt und wenigstens zwei nebeneinander angeordnete Betätigungselemente (21.1, 21.2), die abwechselnd Kräfte mit entgegengesetztem Sinn ausüben, **dadurch gekennzeichnet, daß** der Motor wenigstens vier Betätigungselemente (21.1, 21.2, 21.3, 21.4) mit verschiedenen und parallel zu einer ersten Achse verlaufenden Achsen aufweist, die eine Arbeitsachse des Motors bilden, zwei erste Betätigungselemente (21.1, 21.2), die eine Kraft (27.1, 27.2) in einem ersten Sinn ausüben, und zwei zweite Betätigungselemente (21.3, 21.4), die Kräfte (27.3, 27.4) in einem zweiten Sinn, entgegengesetzt zu dem ersten Sinn, ausüben, und daß die zwei ersten Betätigungselemente (21.1, 21.2) einerseits und die zwei zweiten Betätigungselemente (21.3, 21.4) andererseits symmetrisch in Bezug auf die genannte erste Achse so angeordnet sind, daß sie lineare Verschiebungen ohne Kopplung der Rotation erzeugen.

2. Motor nach Anspruch 1, **dadurch gekennzeichnet, daß** der Motor ein Linearmotor ist.

3. Motor nach einem der Ansprüche 1 oder 2, **dadurch gekennzeichnet, daß** die Betätigungselemente (21.1, 21.2, 21.3, 21.4) Elektromagneten sind.

4. Motor nach einem der vorhergehenden Ansprüche, **dadurch gekennzeichnet, daß** der Motor eine Platine (33) umfaßt, die die unterschiedlichen Betätigungselemente aufnimmt und die träge Masse des Motors bildet.

5. Motor nach einem der vorhergehenden Ansprüche, **dadurch gekennzeichnet, daß** der Motor ferner Betätigungselemente (21.5, 21.6, 21.7, 21.8) umfaßt, die auf Befehl Verschiebungen der beweglichen Ausstattung (19, 33) entlang drei orthogonaler Achsen erlaubt.

6. Motor nach Anspruch 5, **dadurch gekennzeichnet, daß** der Motor zwei dritte Betätigungselemente (21.5, 21.7) aufweist, von denen jedes zwischen ein erstes und ein zweites Betätigungselement geschoben ist, und die Kräfte (27.5, 27.7) mit entgegengesetztem Sinn entlang einer zweiten Achse ausüben, die orthogonal zur ersten Achse ist, und zwei vierte Betätigungselemente (21.6, 21.8), von denen jedes zwischen ein erstes und ein zweites Betätigungselement geschoben ist, und die Kräfte (27.6, 27.8) mit entgegengesetztem Sinn entlang einer dritten Achse ausüben, die orthogonal zur ersten und zur zweiten Achse ist.

7. Motor nach einem der vorhergehenden Ansprüche, **dadurch gekennzeichnet, daß** der Motor ein Gehäuse oder Grundplatte (17) aufweist, welche einen Vibrationsabsorptionskontakt (31) aufnehmen kann und daß die Mittel (43) zur Befestigung des Vibrationsabsorptionskontakts (31) an dem Gehäuse oder der Grundplatte umfaßt.

8. Motor nach einem der vorhergehenden Ansprüche, **dadurch gekennzeichnet, daß** der Motor ein Gehäuse (17) aufweist, das eine zentrale Aussparung umfaßt, die einen Vibrationsabsorptionskontakt (31) aufnimmt, dessen Höhe größer als die vertikale Ausdehnung des Gehäuses (17') ist.

9. Vorrichtung zur aktiven Vibrationskontrolle, einen Vibrationssensor (49, 51) umfassend, der die Erfassung der zu eleminierenden Vibrationen sicherstellt, und Mittel zur Berechnung (53) der Signale der Steuerung der Betätigungselemente in Echtzeit, **dadurch gekennzeichnet, daß** die Vorrichtung wenigstens einen Motor (15) nach einem der vorhergehenden Ansprüche umfaßt, der unter Kontrolle der Mittel zur Berechnung (53) Vibrationen gleicher Amplitude und entgegengesetzt zu den zu kontrollierenden Vibrationen erzeugt.

## Claims

1. An electromagnetic motor comprising a plurality of actuators, and having at least two actuators (21.1, 21.2) disposed side by side and alternately exerting forces in opposite directions, the motor being **characterized in that** it has at least four actuators (21.1, 21.2, 21.3, 21.4) of axes that are different and parallel to a first axis forming a working axis of the motor, said actuators comprising two first actuators (21.1, 21.2) exerting a force (27.1, 27.2) in a first direction, and two second actuators (21.3, 21.4) exerting forces (27.3, 27.4) in a second direction opposite to the first direction, and **in that** the two first actuators (21.1, 21.2) and the two second actuators (21.3, 21.4) are disposed symmetrically about said first axis so as to generate linear displacements without rotary torque.

2. A motor according to claim 1, **characterized in that** said motor is a linear motor.

3. A motor according to claim 1 or claim 2, **characterized in that** the actuators (21.1, 21.2, 21.3, 21.4) are electromagnets.

4. A motor according to any preceding claim, **characterized in that** it includes a plate (33) receiving the various actuators and forming the inertial mass of the motor.

5. A motor according to any preceding claim, **characterized in that** it also has actuators (21.5, 21.6, 21.7, 21.8) making it possible, on command, to displace the moving equipment (19, 33) along three orthogonal axes.

6. A motor according to claim 5, **characterized in that** it has two third actuators (21.5, 21.7), each of which is interposed between a first and a second actuator, and exerting forces in opposite directions (27.5, 27.7) along a second axis that is orthogonal to the first axis, and two fourth actuators (21.6, 21.8), each of which is interposed between a first and a second actuator, and exerting forces in opposite directions (27.6, 27.8) along a third axis that is orthogonal to the first and second axes.

7. A motor according to any preceding claim, **characterized in that** it includes a housing or case (17) suitable for receiving a vibration-absorbing stud (31), and **in that** it includes means (43) for fixing said stud (31) on the housing or on the case.

8. A motor according to any preceding claim, **characterized in that** it presents a housing (17) which includes a central recess receiving a vibration-absorbing stud (31) of height that is greater than the vertical extent of the housing (17').

9. Apparatus for active vibration control, the apparatus comprising a vibration sensor (49, 51) that acquires the vibrations to be eliminated, and controller means (53) for generating actuator-control signals in real time, the apparatus being **characterized in that** it includes at least one motor (15) according to any preceding claim generating vibrations under the control of the controller means (53), which vibrations are equal in amplitude and opposite in phase relative to the vibrations that are to be controlled.
